# EUROPÄISCHE PATENTANMELDUNG

(11) **EP 1 734 271 A1**
(43) Veröffentlichungstag der Anmeldung: **20.12.2006**
(21) Anmeldenummer: 05012612.7
(22) Anmeldetag: 13.06.2005
(51) Int. Cl.: F16C 33/76

(54) **Wälzlager mit einer geschützten Dichtungsanordnung**

(71) Anmelder: ZF FRIEDRICHSHAFEN AG, 88046 Friedrichshafen (DE)
(72) Erfinder: Otto, Thomas, Dr., 97072 Würzburg (DE); Nagler, Franz, 97503 Gädheim-Ottendorf (DE)

(57) **Zusammenfassung**

Die Erfindung beschreibt ein Wälzlager (16) mit zumindest einer Dichtungsanordnung (42,44) zur Abdichtung der Wälzkörperlaufbahnen (34,36). Zum Schutz der Dichtungsanordnung (42,44) vor einem vorzeitigen Verschließ durch äußere Einflüsse, insbesondere Staub, wird vorgeschlagen, an dem Wälzlager (16) oder an einem zu diesem benachbarten weiteren Bauteil (14) Mittel (48,50) auszuführen, welche in der Umgebung des Wälzlagers (16) auftretende Fremdpartikel zumindest teilweise von der Dichtungsanordnung (42,44) fernhalten. Die Mitteln umfassen einen Ablagerungsbereich, der in einem Zirkulationsbereich der Fremdpartikel angeordnet ist. In der anderen Variante sind die Mitteln als ein weiteres Dichtelement ausgebildet.

## Beschreibung

Die Erfindung betrifft ein Wälzlager gemäß dem Oberbegriff des Patentanpruchs 1.

Wälzlager bilden als Ausrücklager eine Hauptkomponente von mechanisch, hydraulisch oder elektrisch betätigten trockenen Reibungskupplungen in Kraftfahrzeugen. Die Einsatzbedingungen eines derartigen Ausrücklagers im Antriebsstrang von Kraftfahrzeugen erfordern zur Erzielung einer möglichst langen Lagerlebensdauer eine sorgfältige Abdichtung des Lagerinnenraumes, in dem die Wälzkörper mit den Laufbahnen des Lagers im kraftübertragenden Wälzkontakt stehen. Dafür sind unmittelbar am Wälzlager bzw. an zu einem Lager benachbarten Bauteilen sowohl berührende als auch unberührende Dichtungsanordnungen in Form von Elastomer- und Labyrinthdichtungen vorgesehen, womit ein Schmierstoffaustritt aus einem Lager und ein Schmutzeintritt in ein Lager auf ein Minimum reduziert werden sollen. Beispielhaft wird hierzu auf die Druckschriften DE 600 10 767 T2 sowie DE 600 10 769 T2 verwiesen.

Als besonders anspruchsvoll erweisen sich Wälzlagerdichtungen in Kraftfahrzeugen, welche außerordentlich großen Staub- und Schmutzmengen ausgesetzt sind, wie dieses beispielsweise im Bergbau der Fall ist. Die Fremdpartikel, die z.B. in der Umgebungsluft enthaltene Schwebstoffe darstellen, gelangen leicht in die Getriebeglocke, werden dort mit der zirkulierenden Luft unmittelbar an das Kupplungsausrücksystem transportiert und lagern sich gemeinsam mit dem ohnehin vorhandenen Kupplungsabrieb bevorzugt an den Dichtelementen des Ausrücklagers ab. Über die prinzipbedingte schwellende Axialbelastung eines Ausrücklagers und durch die verschleißfördernde Aggressivität der Schwebstoffe bzw. Stäube kommt es allmählich zu einer Minderung der Wirksamkeit und schließlich zu einem frühen Versagen der Dichtsysteme, was letztendlich zum Ausfall des Ausrücklagers und damit der gesamten Reibungskupplung führen kann.

Von diesem Problem ausgehend, stellt sich die Erfindung die Aufgabe, ein Wälzlager bereitzustellen, dessen Dichtelemente auch unter extremen äußeren Bedingungen einen im Vergleich zum Stand der Technik länger anhaltenden Schutz des Wälzlagers bewirken und somit eine lebensdauererhöhende Wirkung erzielen.

Die Erfindung löst das gestellte Problem mit einem gattungsgemäßen Wälzlager, welches zusätzlich das im Kennzeichen des Patentanspruchs 1 aufgeführte Merkmal aufweist.

Der Erfindung liegt zunächst der Gedanke zugrunde, dass die Wirksamkeit bzw. Lebensdauer eines Wälzlagers, insbesondere der Dichtungsanordnung im erheblichen Maße von der in einer bestimmten Zeit auf dieses einwirkenden Menge an Schmutz- bzw. Staubpartikeln mitbestimmt wird. Bei einem Kupplungsbetätigungssystem wird die durch Kupplungsabrieb erzeugte und die in der Umgebung eines Kupplungsausrücklagers zirkulierende Menge an Fremdpartikeln durch die Betriebsbedingungen bestimmt und kann deshalb nur unwesentlich beeinflusst werden. Die Erfindung basiert daher auf der Idee, die Schmutzpartikelmenge lokal, und zwar im Bereich der gefährdeten Wälzlagerdichtungsanordnung, zu reduzieren. Es wird zur Lösung des Problems vorgeschlagen, dass an dem Wälzlager oder an einem zu diesem benachbarten weiteren Bauteil Mittel ausgeführt sind, welche in der Umgebung des Wälzlagers auftretende Fremdpartikel zumindest teilweise von der Dichtungsanordnung fernhalten. Somit wird die Fremdpartikelbelastung an der Dichtungsanordnung und damit der dort auftretende Verschleiß reduziert, wodurch die Lebensdauer eines Wälzlagers beachtlich gesteigert werden kann.

Vorteilhafte Ausführungsformen und Weiterbildungen der Erfindung sind in den abhängigen Ansprüchen beschrieben.

Gemäß einer besonders bevorzugten Ausführung der Erfindung ist vorgesehen, dass die Mittel eine Ablagerung von Fremdpartikeln abseits der Dichtungsanordnung bewirken. Dadurch werden die Fremdpartikel dauerhaft aus dem kritischen Bereich der Dichtungsanordnung entzogen. Da dieser Entzug permanent erfolgt, wird auch bei ständig neu in die Lagerumgebung eintretenden Fremdpartikeln deren Konzentration gegenüber dem Stand der Technik auf einem relativ niedrigen Niveau gehalten.

Mit Vorteil umfassen die gemäß Patentanspruch 1 beschriebenen Mittel einen Ablagerungsbereich, der in einem Zirkulationsbereich der Fremdpartikel bzw. der Schwebstoffe angeordnet ist. Auf diese Weise wird zunächst ein zusätzlicher Oberflächenbereich zur Ablagerung geschaffen, in welchem sich Fremdpartikel dauerhaft akkumulieren können. Die Ablagerung kann unterstützt werden, wenn diese Bereiche mit einem Haftmittel, z.B. Fett, versehen sind, wodurch eine besondere Affinität für Schwebstoffe erzeugt wird.

Mit Vorteil ist der Ablagerungsbereich benachbart zu der Dichtungsanordnung ausgeführt. Wenn gleichzeitig die Partikelströmung so beeinflusst wird, dass diese zu dem Ablagerungsbereich gelangt, bevor die sensible Dichtungsanordnung mit Fremdpartikeln beaufschlagt wird, so kann dadurch Schmutz hauptsächlich am vorgesehenen Ablagerungsbereich deponiert werden und die Dichtungsanordnung bleibt weitestgehend von diesem verschont.

Gemäß einer weiteren vorteilhaften Ausgestaltung der Erfindung erweist es sich auch als sinnvoll, in der Umgebung eines Wälzlagers als Mittel gemäß Anspruch 1, Strömungskanäle zur Beeinflussung einer Fremdpartikelströmung auszubilden. Die Strömungskanäle bilden Druckausgleichsöffnungen und ermöglichen, dass Fremdpartikelströme, beispielsweise infolge Kupplungsabrieb, gezielt von der Dichtungsanordnung des Wälzlagers weggeleitet werden und an einem vorgesehenen Bereich deponiert werden kann.

Es besteht gemäß einer noch weiteren Variante auch die Möglichkeit, Fremdpartikel sogar in der Umgebung der Dichtungsanordnung eines Wälzlagers zu tolerieren, wenn die erfindungsgemäßen Mittel ein der Dichtungsanordnung vorgelagertes weiteres Dichtelement, das bspw. als Bestandteil einer Labyrinth-Dichtung ausgebildet ist, umfassen. Existierende Fremdpartikel werden sich somit an dieser Vor-Dichtung ablagern und ab einer gewissen Anhäufung bzw. Pfropfenbildung wird der Zutritt von Fremdpartikeln zu der Haupt-Dichtungsanordnung blockiert.

Es versteht sich, dass die erläuterten Mittel zum Schutz einer Dichtungsanordnung eines Wälzlagers entweder allein oder in Kombination gemeinsam an einem Wälzlager oder in dessen Umgebung ausgeführt sein können.

Die Erfindung wird nachfolgend anhand der beiliegenden Zeichnungen beispielhaft erläutert. Es zeigen:
- Fig. 1: ein Ausrücklager mit einer Dichtungsanordnung und Mitteln; welche in der Umgebung des Wälzlagers auftretende Fremdpartikel zumindest teilweise von der Dichtungsanordnung fernhalten;
- Fig. 2: eine Teildarstellung eines Ausrücklagers mit einer zu einer Haupt-Dichtungsanordnung vorgelagerten Vor-Dichtung;
- Fig. 3: eine Teildarstellung eines Ausrücklagers gemäß Fig. 2 mit einem zu einer Haupt-Dichtungsanordnung benachbarten Depot für Schmutzablagerungen.

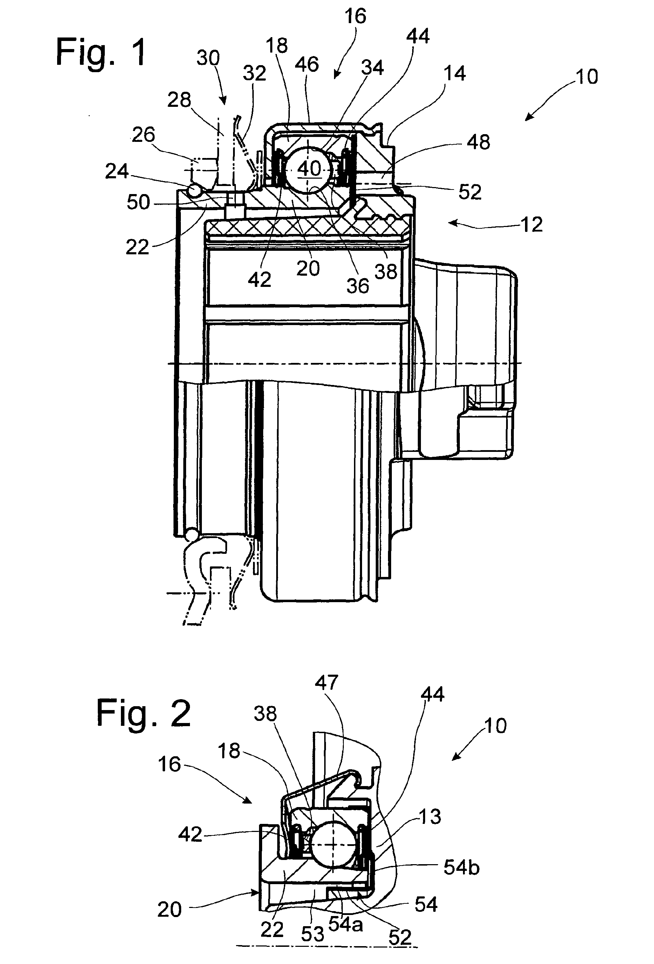

Fig. 1 zeigt einen in gezogener Bauweise ausgeführten Ausrücker 10 zum Betätigen einer nicht dargestellten Kraftfahrzeugreibungskupplung. Dieser umfasst zunächst als Trägerelement 12 eine Schiebehülse 12 mit einem daran angeordneten Radialflansch 14 und ein an diesem befestigtes Ausrücklager 16, welches als Schrägkugellager ausgebildet ist. Das Kugellager 16 weist einen bezüglich der Schiebehülse 12 in Umfangsrichtung feststehenden ersten, radial äußeren Lagerring 18 und einen umlaufenden zweiten, radial inneren Lagerring 20 auf, welcher mittels eines Axialfortsatzes 22 über das Lager 16 hinaus verlängert ist und mittels eines Lastringes 24 und eines Ausrückringes 26 mit Zungenenden 28 einer Membranfeder 30 in Wirkverbindung steht, welche sich wiederum durch die Wirkung einer Vorlastfeder 32 im ständigen Anlagekontakt mit dem Ausrückring 26 befindet. Die zeichnerisch nur marginal dargestellte Membranfeder 30 stellt das Ausrückorgan der zu betätigenden Reibungskupplung dar.

Die Lagerringe 18, 20 weisen zueinander zugewandte Laufbahnen 34, 36 für eine Mehrzahl in einem Kugelkäfig 38 geführte Kugeln 40 auf. Zum Schutz vor dem Eindringen von Schmutz und gleichfalls vor dem Austreten von einem im Lagerinneren befindlichen Schmiermittel sind stirnseitig zwischen den Lagerringen 18, 20 in bekannter Art zwei Berührungsdichtungen 42, 44 ausgeführt. Der Radialflansch 14 trägt ein an diesem verrolltes Halteblech 46, welches den radial äußeren, feststehenden Lagerring 18 und die Dichtungen 42, 44 umgreift und somit das Wälzlager 16 axial an der Schiebehülse 12 festhält.

Um die Staubablagerungen insbesondere im Bereich der zu dem Radialflansch 14 benachbarten Berührungsdichtung 44 zu reduzieren, sind mehrere in Umfangsrichtung verteilte, axial verlaufende Ausnehmungen 48, hier Bohrungen, in dem Radialflansch 14 vorgesehen, welche als Druckausgleichsöffnungen wirken und einen Fremdpartikelstrom zumindest teilweise vom Lager 16 weg leiten können. Die Ausnehmungen 48 bilden außerdem vorbestimmte Ablagerungsbereiche für Staub- und Schmutzpartikel.

Axial zwischen dem Ausrücklager 16 und dem Radialflansch 14 ist eine Wellfeder 52 eingespannt, die den radialen Verschiebeweg des Ausrücklagers 16 gegenüber der Schiebehülse 12 unter einer definierten Klemmlast halten soll. Des weiteren sind am Axialfortsatz 22 radial verlaufende Bohrungen 50 ausgebildet, welche ebenfalls als Druckausgleichsöffnungen wirken.

Fig. 2 zeigt einen Ausschnitt eines im Vergleich zu dem vorgenannten Beispiel im Aufbau modifizierten Ausrückers 10 in einer gedrückten Bauart mit einem Ausrücklager 16, welches wiederum einen bezüglich einer Tragestruktur 13 feststehenden ersten, radial äußeren Lagerring 18 und einen umlaufenden zweiten, radial inneren Lagerring 20, Kugeln 40, einen Kugelkäfig 38 sowie axial beidseitige Berührungsdichtungen 42, 44 aufweist. Die Tragestruktur 13 ist hierbei als Kolben eines konzentrisch um eine zeichnerisch nicht dargestellte Kupplungsausgangswelle angeordneten hydraulischen oder pneumatischen Nehmerzylinders ausgebildet. Das Ausrücklager 16 ist mit einer Hakenfeder 47 an der Tragestruktur 13 axial festgelegt und kann sich an dieser beim Betätigen der Reibungskupplung selbsttätig radial ausrichten, wozu radial zwischen dem Lagerinnenring 20 und einem axial verlaufenden Abschnitt der Tragestruktur 13 ein Justierspalt 53 vorgesehen ist. Zum Schutz der der Tragestruktur 13 zugewandten Berührungsdichtung 44 wurde das Ausrücklager 16 mit einem zwischen diesem und der Tragestruktur 12 angeordneten axial abgewinkelten Blechring 52 ergänzt, welcher mit dem Ausrücklager 16 einen Dichtspalt 54 mit einem radialen Spaltbereich 54a und einem axialen Spaltbereich 54b einer Labyrinthdichtung ausbildet, welche bezüglich der Berührungsdichtung 44 als vorgelagertes Dichtelement wirkt und Staub räumlich vor der Berührungsdichtung 44 auffangen kann. Die Größe des Dichtspalts 54 ist konstant und unabhängig von der radialen Justageposition des Ausrücklagers 16 an der Tragestruktur 13.

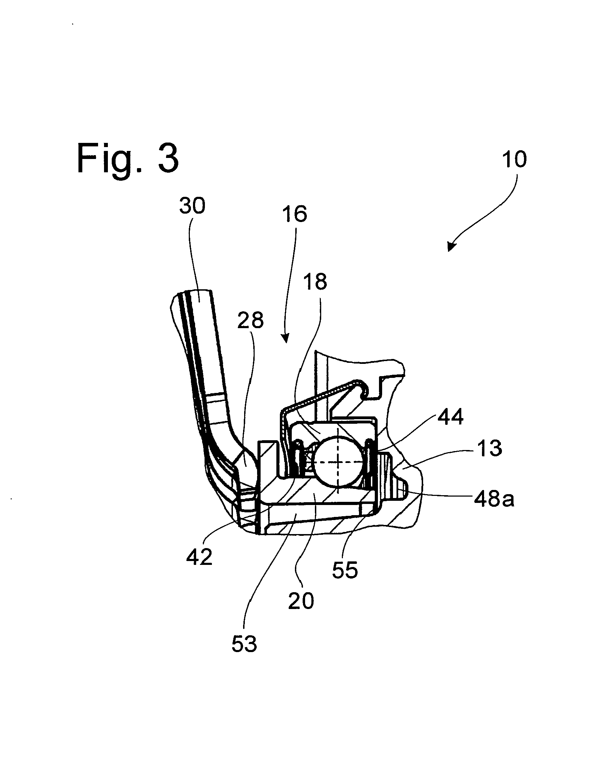

Fig. 3 zeigt einen Ausschnitt eines Ausrückers gemäß Fig. 2, wobei an der Tragestruktur 13 eine ringförmige Ausnehmung 48a ausgeführt ist. Diese ist unmittelbar benachbart zu der Dichtungsanordnung 44 angeordnet und bildet mit der Berührungsdichtung 44 und dem Innenring 20 einen Ringraum 48a, welcher lediglich über eine relativ kleine Öffnung 55 an der axialen Begrenzung des Justierspalts 53 für Schmutz zugänglich ist. Ein in den Justierspalt 53 eindringender Schmutzpartikelstrom wird somit zunächst in den Ringraum 48a geleitet, wo sich dieser bevorzugt an dem der Berührungsdichtung 44 und dem Innenring 20 axial gegenüberliegenden Wandbereich ablagern kann. Die ringförmige Ausnehmung 48a kann zusätzlich durch Versteifungsrippen unterbrochen sein, wodurch in Umfangsrichtung mehrere Taschen bzw. Vertiefungen gebildet werden.

### Bezugszeichenliste

- 10: Ausrücker
- 12: Schiebehülse
- 13: Tragestruktur
- 14: Radialflansch
- 16: Wälzlager, Ausrücklager
- 18, 20: Lagerring
- 22: Axialfortsatz
- 24: Lastring
- 26: Ausrückring
- 28: Zungenende
- 30: Membranfeder
- 32: Vorlastfeder
- 34, 36: Laufbahn
- 38: Kugelkäfig
- 40: Kugeln
- 42, 44: Berührungsdichtung
- 46: Halteblech
- 47: Hakenfeder
- 48, 48a, 50: Ausnehmung
- 52: Wellfeder
- 53: Justierspalt
- 54, 54a,b: Dichtspalt
- 55: Öffnung

## Patentansprüche

1. Wälzlager (16), umfassend
- einen ersten (18) und einen zweiten Lagerring (20),
- an den Lagerringen (18, 20) ausgebildete und einander zugewandte Laufbahnen (34, 36),
- zwischen den Lagerringen (18, 20) auf den Laufbahnen (34, 36) umlaufende Wälzkörper (40) sowie
- zumindest eine Dichtungsanordnung (42;44) zur Abdichtung des Wälzlagers (16),
**dadurch gekennzeichnet,**
**dass** an dem Wälzlager (16) oder an einem zu diesem benachbarten weiteren Bauteil (12, 13, 14) Mittel (48, 50, 54) ausgeführt sind, welche in der Umgebung des Wälzlagers (16) auftretende Fremdpartikel zumindest teilweise von der Dichtungsanordnung (42, 44) fernhalten.

2. Wälzlager nach Anspruch 1,
**dadurch gekennzeichnet,**
**dass** die Mittel (48, 50, 54) eine Ablagerung von Fremdpartikeln abseits der Dichtungsanordnung (42, 44) bewirken.

3. Wälzlager nach Anspruch 1 oder 2,
**dadurch gekennzeichnet,**
**dass** die Mittel einen in einem Zirkulationsbereich der Fremdpartikel angeordneten Ablagerungsbereich (48, 50, 54) umfassen.

4. Wälzlager nach Anspruch 3,
**dadurch gekennzeichnet,**
**dass** der Ablagerungsbereich (48, 50, 54) ein Haftmittel aufweist.

5. Wälzlager nach Anspruch 3 oder 4,
**dadurch gekennzeichnet,**
**dass** der Ablagerungsbereich (48, 50, 54) benachbart zu der Dichtungsanordnung (42, 44) ausgeführt ist.

6. Wälzlager nach einem der Ansprüche 1 - 5,
**dadurch gekennzeichnet,**
**dass** die Mittel Strömungskanäle (50) zur Beeinflussung einer Fremdpartikelströmung umfassen.

7. Wälzlager nach einem der Ansprüche 1 - 6,
**dadurch gekennzeichnet,**
**dass** die Mittel ein der Dichtungsanordnung (44) vorgelagertes Dichtelement (52) umfassen.

8. Wälzlager nach Anspruch 7
**dadurch gekennzeichnet,**
**dass** das vorgelagerte Dichtelement (52) als Bestandteil einer Labyrinth-Dichtung (54) ausgebildet ist.
